Europäisches Patentamt

European Patent Office

Office européen des brevets

(11) Veröffentlichungsnummer: 0 192 072
A2

# (12) EUROPÄISCHE PATENTANMELDUNG

(21) Anmeldenummer: 86100795.3

(22) Anmeldetag: 22.01.86

(51) Int. Cl.⁴: H04L 11/00 , H04L 11/08

(30) Priorität: 20.02.85 DE 3505884

(43) Veröffentlichungstag der Anmeldung:
27.08.86 Patentblatt 86/35

(84) Benannte Vertragsstaaten:
AT DE IT NL

(71) Anmelder: Siemens Aktiengesellschaft Berlin und
München
Wittelsbacherplatz 2
D-8000 München 2(DE)

(72) Erfinder: Franz, Dietmar, Dipl.-Ing. (FH)
Edelweissstrasse 66
D-8039 Puchheim(DE)

(54) Verfahren zum Übertragen von den Betrieb einer Signalbehandlungseinrichtung betreffenden Informationssignalen.

(57) Zum Übertragen von den Betrieb einer Signalbehandlungseinrichtung (SBE) betreffenden Informationssignalen von dieser Signalbehandlungeinrichtung her zu einer mit dieser über eine Anzahl von Übertragungskanälen (K1 bis Kn) verbundenen Datenvermittlungsanlage (EDS) ist ein Sonderkanal (USART3) vorgesehen, über den die Informationssignale von der Signalbehandlungseinrichtung her im Zuge einer gesonderten Verbindung zu einer die Informationssignale aufnehmenden Einrichtung der Datenvermittlungsanlage hin übertragen werden.

EP 0 192 072 A2

Verfahren zum Übertragen von den Betrieb einer Signalbehandlungseinrichtung betreffenden Informationssignalen

Die Erfindung betrifft ein Verfahren zum Übertragen von den Betrieb einer Signalbehandlungseinrichtung betreffenden Informationssignalen von dieser Signalbehandlungseinrichtung her zu einer mit dieser über eine Anzahl von Übertragungskanälen verbundene Datenvermittlungsanlage.

Es ist bereits ein Verfahren zum Übertragen von den Betrieb eines Signalumsetzers betreffenden Steuersignalen bekannt (DE-OS 30 30 887). Bei diesem bekannten Verfahren wird von einem Signalumsetzer her, welcher über zwei Übertragungskanäle mit einer Datenvermittlungsanlage verbunden ist, immer dann ein Steuersignal über einen der Übertragungskanäle zu der Datenvermittlungsanlage hin übertragen, wenn der Signalumsetzer gestört ist.

Es ist außerdem ein Teletex-Telex-Umsetzer bekannt - (Zeitschrift "Philips Telecommunication Review", Band 39, No 2, Juni 1981, Seiten 49 bis 62). Hierbei handelt es sich um eine Umsetzeinrichtung, die eine Signalübertragung zwischen Datenvermittlungsanlagen unterschiedlicher Vermittlungsnetze ermöglicht. Die Umsetzeinrichtung weist eine Mehrzahl von der Signalübertragung dienenden Moduln auf, welche jeweils über Übertragungskanäle mit zwei zu verbindenden Datenvermittlungsanlagen verbunden sind. Soll einer dieser Moduln als Ganzes für eine Datensignalübertragung gesperrt werden, so werden Belegtsignale zu den Datenvermittlungsanlagen hin übertragen, um auf diese Weise die Annahme von neuen Rufen zu vermeiden.

Es ist nun Aufgabe der vorliegenden Erfindung, einen Weg zu zeigen, wie bei einem Verfahren der eingangs genannten Art in der Signalbehandlungseinrichtung zur Verfügung stehende, deren Betrieb als Ganzes bzw. den Betrieb einzelner Übertragungskanäle betreffende Informationssignale mit einem geringen Steuerungsaufwand zu einer Datenvermittlungsanlage hin übertragen werden können.

Gelöst wird die vorstehend aufgezeigte Aufgabe bei einem Verfahren der eingangs genannten Art erfindungsgemäß dadurch, daß die Informationssignale jeweils von der Signalbehandlungseinrichtung her über einen zwischen dieser und der Datenvermittlungsanlage bestehenden, gegebenenfalls von den Übertragungskanälen verschiedenen Sonderkanal im Zuge einer gesonderten Verbindung zu einer die Informationssignale aufnehmenden Einrichtung der Datenvermittlungsanlage hin übertragen werden.

Die Erfindung bringt den Vorteil mit sich, daß auch während der Übertragung von Datensignalen über eine Anzahl von Übertragungskanälen von der Signalbehandlungseinrichtung her diese Übertragungskanäle oder die Signalbehandlungseinrichtung als Ganzes betreffende Informationssignale zu der Datenvermittlungsanlage hin übertragen werden können.. Ein weiterer Vorteil besteht darin, daß für die Übertragung von beliebigen Informationssignalen zwischen der Signalbehandlungseinrichtung und der Datenvermittlungsanlage lediglich eine einzige Prozedur-Schnittstelle erforderlich ist, so daß der für die Steuerung dieser Prozedur-Schnittstelle sowohl in der Signalbehandlungseinrichtung als auch in der Datenvermittlungsanlage erforderliche Steuerungsaufwand gering ist.

Eine weitere Reduzierung des für die Aufnahme von Informationssignalen in der Datenvermittlungsanlage erforderlichen Steuerungsaufwandes läßt sich erreichen, wenn als Informationssignale aufnehmende Einrichtung eine Bedienungseinrichtung benutzt wird, die an eine Teilnehmerleitung der Datenvermittlungsanlage angeschlossen wird. Auf diese Weise wird die Bedienungseinrichtung von der Datenvermittlungsanlage her wie eine Teilnehmereinrichtung behandelt, so daß für die Aufnahme von Informationssignalen von der Signalbehandlungseinrichtung her lediglich Steuerungsvorgänge für den normalen Vermittlungsbetrieb in der Datenvermittlungsanlage zu aktivieren sind.

Informationssignale können über den Sonderkanal jeweils entweder während der Datenübertragungsphase einer gesonderten Verbindung oder in Form eines Dienstsignales im Zuge des Verbindungsaufbaues einer solchen gesonderten Verbindung übertragen werden. Zweckmäßigerweise wird für die Übertragung von Informationssignalen die Datenübertragungsphase immer dann gewählt, wenn die Informationssignale jeweils in Form einer größeren Datenmenge zu übertragen sind. Sind dagegen als Informationssignale lediglich geringe Datenmengen zu übertragen, so ist es vorteilhaft, diese als Dienstsignale im Zuge des Verbindungsaufbaues zu übertragen. Auf diese Weise wird die Belegung des Sonderkanals für die einzelnen Verbindungen reduziert, da für eine Verbindung bereits vor Eintritt in die Datenübertragungsphase wieder ausgelöst werden kann.

Als Informationssignale können in vorteilhafter Weise eine Betriebsstörung anzeigende Signale übertragen werden, welche immer dann von der Signalbehandlungseinrichtung abgegeben werden, wenn im Zuge einer Selbstüberprüfung eine Störung im Betriebsablauf erkannt wird. Eine derartige Vorgehensweise bringt den Vorteil mit sich, daß in der Datenvermittlungsanlage für eine routinemäßige Überprüfung der Signalbehandlungseinrichtung keine Steuerungsvorgänge zu aktivieren sind. Informationssignale werden von der Signalbehandlungseinrichtung nur dann abgegeben, wenn im Betriebsablauf eine Störung festgestellt worden ist.

Sind mehrere Datenvermittlungsanlagen über eine Signalbehandlungseinrichtung miteinander verbunden, so können in vorteilhafter Weise als Informationssignale den Vermittlungsbetrieb zwischen den miteinander verbundenen Datenvermittlungsanlagen betreffende Signale übertragen werden, welche von einer der Datenvermittlungsanlagen her über die Signalbehandlungseinrichtung zu einer weiteren Datenvermittlungsanlage zu übertragen sind.

Im folgenden wird nun die Erfindung anhand einer Zeichnung beispielsweise näher beschrieben.

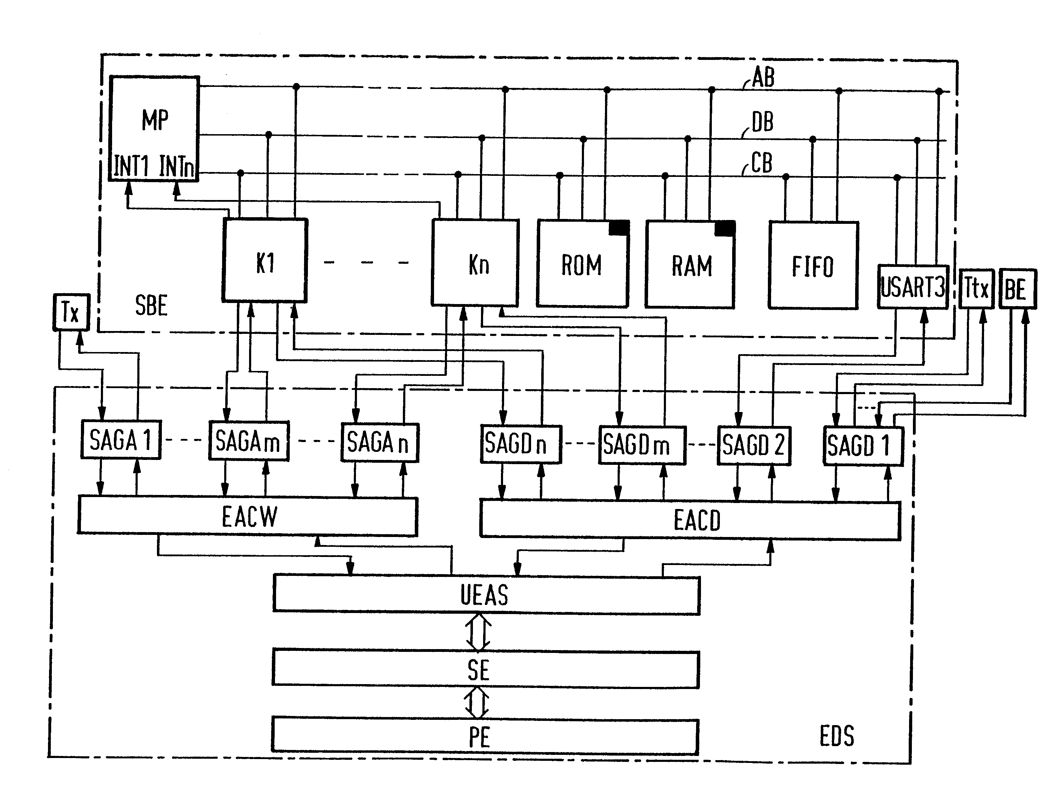

In der Zeichnung ist ausschnittweise eine Datenvermittlungsanlage EDS dargestellt. Über diese sind allgemein Datensignale übertragbar, unter die beispielsweise Fernschreibsignale oder auch Sprachsignale in digital kodierter Form fallen. Zur Verdeutlichung wird deshalb im folgenden die Datenvermittlungsanlage EDS als Fernschreib- und Datenvermittlungsanlage bezeichnet.

Von der Fernschreib- und Datenvermittlungsanlage EDS sind lediglich zu einer ersten Gruppe von Anschlußschaltungen gehörende Anschlußschaltungen SAGA1, SAGAm, SAGAn, zu einer zweiten Gruppe von Anschlußschaltungen gehörende Anschlußschaltungen SAGD1, SAGD2, SAGDm und SAGDn, den einzelnen Gruppen von Anschlußschaltungen zugehörige Eingabe-/Ausgabe-Codewandler EACW bzw. EACD, eine Übertragungsablaufsteuerung UEAS, eine Speichereinheit SE und eine Programmsteuereinheit PE angedeutet. Die mit dem Eingabe-/Ausgabe-Codewandler EACW verbundenen Anschlußschaltungen (SAGA1 bis SAGAn) dienen dazu, digitale Datensignale polaritätswechselweise zu verarbeiten. Die mit dem anderen Eingabe-/Ausgabe-Codewandler EACD verbundenen Anschlußschaltungen dienen dagegen zur Verarbeitung von sogenannten Bitgruppen. Diese Bitgruppen sind jeweils eine Mehrzahl von Bits, beispielsweise 8 Bits, umfassende digitale Datensignale, die auch als Envelopes bezeichnet werden. Die Aufgabe dieser Eingabe/Ausgabe-Codewandler besteht u. a. darin, über die einzelnen Anschlußschaltungen zugeführte Signale zu dem eigentlichen Verarbeitungsteil der Fernschreib- und Datenvermittlungsanlage EDS weiterzuleiten bzw. von diesem Verarbeitungsteil her über die Anschlußschaltungen abzugebende Signale weiterzuleiten. Die Eingabe-/Ausgabe-Codewandler sind hierzu mit der Übertragungsablaufsteuerung UEAS verbunden. Diese Übertragungsablaufsteuerung steuert den Signalaustausch zwischen den Eingabe-/Ausgabe-Codewandlern und der Speichereinheit SE, die bestimmte, ihr von der Übertragungsablaufsteuerung zugeführte Signale an die Programmsteuereinheit PE weiterleitet. Außerdem gibt die Speichereinheit SE die ihr von der Programmsteuereinheit zugeführten Signale an die Übertragungsablaufsteuerung UEAS ab.

Von den Polaritätswechsel verarbeitenden Anschlußschaltungen sind einige mit Teilnehmereinrichtungen verbunden, welche digitale Signale mit einer ersten Datenübertragungsprozedur abgeben bzw. aufnehmen. Bei diesen Teilnehmereinrichtungen mag es sich um übliche Fernschreib- bzw. Telex-Endgeräte handeln, von denen in der Zeichnung eines mit Tx bezeichnet ist. Diese Telex-Endgeräte mögen mit einer für Telexübertragungen üblichen Datenübertragungsrate von 50 Bd und unter Ausnutzung des internationalen Telegrafenalphabets Nr. 2 arbeiten, also mit einem Start-Stop-Datenformat. Das Telex-Endgerät Tx ist dabei beispielsweise über eine Leitungsanordnung an der Anschlußschaltung SAGA1 angeschlossen. Eine Anschlußschaltung ermöglicht dabei im allgemeinen den Anschluß einer Mehrzahl von Telex-Endgeräten. Zur Vereinfachung der Zeichnung ist jedoch lediglich ein Anschluß angedeutet. Diese Vereinfachung gilt im übrigen auch für die anderen in der Zeichnung dargestellten Anschlußschaltungen.

Mit einigen der digitale Datensignale in Form von Bitgruppen bzw. Envelopes verarbeitenden Anschlußschaltungen (SAGD1 bis SAGDn) sind Einrichtungen verbunden, die digitale Nachrichtensignale mit einer zweiten Datenübertragungsprozedur abgeben bzw. aufnehmen, und zwar seriell in Form von Bitgruppen bzw. Envelopes. Bei diesen Einrichtungen mag es sich beispielsweise um sogenannte Bürofernschreibstationen handeln, die auch als Teletex-Endgeräte bezeichnet werden. In der Zeichnung ist ein derartiges Teletex-Endgerät mit Ttx bezeichnet. Dieses Teletex-Endgerät ist an der Anschlußschaltung SAGD1 angeschlossen. Diese Anschlußschaltung steht außerdem noch mit einer weiteren in der Zeichnung mit BE bezeichneten Einrichtung in Verbindung. Bei dieser Einrichtung, auf die im folgenden noch näher eingegangen wird, handelt es sich z.B. um eine als Bedienungseinrichtung der Fernschreib- und Datenvermittlungsanlage dienendes Teletex-Endgerät. Bezüglich der mit der zuletzt genannten Anschlußschaltung verbundenen Einrichtungen sei noch angemerkt, daß diese beispielsweise seriell auftretende digitale Datensignale entsprechend dem internationalen Alphabet IA Nr. 5 mit einer Datenübertragungsrate von beispielsweise 2400 bit/s abgeben und aufnehmen können, und zwar als synchrone Datensignale.

An die genannten Anschlußschaltungen können auch anstelle von Telex-Endgeräten bzw. Teletex-Endgeräten Übertragungsleitungen angeschlossen sein, die die Fernschreib- und Datenvermittlungsanlage EDS mit weiteren Datenvermittlungsanlagen verbinden.

Mit der in der Zeichnung dargestellten Fernschreib- und Datenvermittlungsanlage EDS ist eine Signalbehandlungseinrichtung SBE verbunden. Diese Signalbehandlungseinrichtung dient zur Behandlung von über die Fernschreib- und Datenvermittlungsanlage zu übertragenden Datensignalen. Eine Behandlung von Datensignalen kann dabei beispielsweise in einer Datenübertragungsprozedur- und/oder Datenformatumsetzung, in einer Weiterleitung der Datensignale an eine vorgegebene Anzahl von Teilnehmerstellen oder auch in einer Zwischenspeicherung der Datensignale bis zu deren Abruf durch eine autorisierte Person bestehen. Derartige Signalbehandlungseinrichtungen werden auch allgemein als Sende- und Empfangshilfe bezeichnet. Als Beispiele für derartige Signalbehandlungseinrichtungen seien hier genannt Signalumsetzer, Rundsendeeinrichtungen, welche an eine Mehrzahl von Teilnehmerstellen weiterzuleitende Datensignale zugeführt erhalten, und Einrichtungen für den elektronischen Briefdienst (Mail-Box), in denen von autorisierten Personen abrufbare Nachrichten - (Datensignale) zwischengespeichert sind.

Die in der Zeichnung dargestellte Signalbehandlungseinrichtung SBE weist einen Mikroprozessor MP auf, der an ein Busleitungssystem angeschlossen ist. Dieses Busleitungssytem besteht aus einem Adressbus AB, einem Datenbus DB und einem Steuerbus CB. An dieses Busleitungssystem ist außerdem eine Mehrzahl von Übertragungskanälen K1 bis Kn angeschlossen. Diese Übertragungskanäle dienen sowohl zur Übertragung von zu behandelnden Datensignalen zu der Signalbehandlungseinrichtung hin als auch zur Abgabe von in dieser behandelten Datensignale an die Fernschreib- und Datenvermittlungsanlage. Intern weisen die Übertragungskanäle im wesentlichen Schnittstellenschaltungen für den Anschluß an die bereits oben erwähnten Anschlußschaltungen der Fernschreib- und Datenvermittlungsanlage EDS auf.

Jeder der gerade genannten Übertragungskanäle K1 bis Kn ist sowohl mit einer zu der ersten Gruppe von Anschlußschaltungen SAGA1 bis SAGAn gehörenden Anschlußschaltung als auch mit einer zu der zweiten Gruppe von Anschlußschaltungen SAGD1 bis SAGDn gehörenden Anschlußschaltung verbunden. In der Zeichnung ist der Übertragungskanal K1 an die Anschlußschaltungen SAGAm und SAGDn angeschlossen. Der Übertragungskanal Kn ist dagegen mit den Anschlußschaltungen SAGAn und SAGDm verbunden.

Wie bereits erwähnt, sind die Übertragungskanäle K1 bis Kn über das interne Busleitungssystem der Signalbehandlungseinrichtung SBE mit dem Mikroprozessor MP verbunden. Über dieses Busleitungssystem erfolgt die Signalübertragung von bzw. zu dem Mikroprozessor hin. Der Mikroprozessor ist außerdem mit seinen Unterbrechungseingängen INT1 bis INTn jeweils an einen Übertragungskanal K1 bis Kn angeschlossen. Über diese Verbindungen kann der Mikroprozessor MP in seinem Betrieb von den Übertragungskanälen her veranlaßt werden, die Abwicklung von Datenübertragungsvorgängen zu steuern.

An das Busleitungssystem der Signalbehandlungseinrichtung SBE ist außerdem eine Speicheranordnung mit entsprechenden Anschlüssen angeschlossen. Zu dieser Speicheranordnung gehört ein Festwertspeicher ROM, in dem die für den Betrieb der Signalumsetzeinrichtung erforderliche Befehlsfolge für den Mikroprozessor gespeichert ist. Daneben ist ein Speicher RAM mit wahlfreiem Zugriff vorgesehen. Bei diesem Speicher handelt es sich um einen Schreib-/Lese-Speicher. In diesen werden die für die Übertragungskanäle K1 bis Kn übertragenen zu behandelnden Datensignale zwischengespeichert. Schließlich gehört zu der Speicheranordnung noch ein Durchlaufspeicher FIFO. In diesem Durchlaufspeicher werden, wie im folgenden noch erläutert werden wird, an die Fernschreib- und Datenvermittlungsanlage EDS abzugebende Informationssignale zwischengespeichert.

Mit dem bereits erwähnten Busleitungssystem der Signalbehandlungseinrichtung SBE ist schließlich noch eine Schnittstellenschaltung USART3 verbunden. Über diese Schnittstellenschaltung werden die Informationssignale zu der Fernschreib- und Datenvermittlungsanlage her übertragen. Die Schnittstellenschaltung ist hierfür mit einer zu der zweiten Gruppe von Anschlußschaltungen der Fernschreib- und Datenvermittlungsanlage gehörenden Anschlußchaltung verbunden. Diese möge beispielsweise die in der Zeichnung mit SAGD2 bezeichnete Anschlußschaltung sein.

Nachdem zuvor der Aufbau der in der Zeichnung dargestellten Schaltungsanordnung erläutert worden ist, sei nunmehr die Arbeitsweise dieser Schaltungsanordnung näher betrachtet. Hierzu sei zunächst kurz auf das Prinzip der Datensignalübertragung zwischen der Fernschreib- und Datenvermittlungsanlage EDS und der Signalbehandlungseinrichtung SBE eingegangen, ehe dann die Übertragung von Informationssignalen zu der Fernschreib- und Datenvermittlungsanlage hin erläutert wird. Hierzu sei angenommen, daß die Signalbehandlungseinrichtung SBE eine Umsetzung von ihr zugeführten Teletex-Signalen in Telex-Signale ermöglicht. Sind beispielsweise von dem in der Zeichnung dargestellten Teletex-Endgerät Ttx Datensignale zu dem Telex-Endgerät Tx zu übertragen, so wird zunächst zwischen dem genannten Teletex-Endgerät und der Fernschreib- und Datenvermittlungsanlage EDS eine Verbindung aufgebaut, beispielsweise entsprechend der CCITT-Empfehlung X.21. Aus den im Zuge des Verbindungsaufbaues von dem Teletex-Endgerät her übertragenen Wählzeichen geht hervor, daß eine Verbindung zu einem Telex-Endgerät gewünscht ist, d. h. daß eine Umsetzung der Übertragungsprozedur vorzunehmen ist. Derartige Wählzeichen werden in der Fernschreib- und Datenvermittlungsanlage als solche erkannt. Auf die Funktionen der Fernschreib- und Datenvermittlungsanlage wird hier jedoch nicht näher eingegangen. Diese Funktionen sind bereits hinlänglich bekannt (siehe beispielsweise "Siemens-Zeitschrift", Heft 2, 1977, Seiten 82 bis 87).

Bei Erkennen von Verbindungswünschen zu der Signalbehandlungseinrichtung hin belegt die Fernschreib- und Datenvermittlungsanlage EDS einen bis dahin freien Übertragungskanal der Signalbehandlungseinrichtung SBE. Nach der Belegung eines solchen Übertragungskanals wird dann von der Fernschreib- und Datenvermittlungsanlage her eine Verbindung über den belegten Übertragungskanal zu der Signalbehandlungseinrichtung hin aufgebaut. Der Verbindungsaufbau kann dabei beispielsweise gemäß der CCITT-Empfehlung X.71 erfolgen. Nach einem erfolgten Aufbau der Verbindung werden dann die umzusetzenden Datensignale zu der Signalbehandlungseinrichtung hin übertragen. Für die Aufnahme von umzusetzenden Datensignalen werden den einzelnen Übertragungskanälen der Signalbehandlungseinrichtung dabei Speicherbereiche des Schreib-/Lese-Speichers RAM durch den Mikroprozessor MP zugeordnet. Zusammen mit den umzusetzenden Datensignalen werden im übrigen auch noch Signalisierungsinformationen zwischengespeichert, die eine anschließende Weiterleitung der umgesetzten Datensignale an den in Frage kommenden Empfänger dieser Datensignale ermöglichen. Bei dem hier gewählten Beispiel ist dies das Telex-Endgerät Tx.

In einem Speicherbereich des Schreib-/Lese-Speichers RAM zwischengespeicherte Datensignale werden anschließend von dem Mikroprozessor MP in von Telex-Endgeräten verarbeitbare Signale umgesetzt und im Zuge einer weiteren Verbindung zu dem als Empfänger in Frage kommenden Telex-Endgerät hin übertragen, also hier zu dem Telex-Endgert Tx hin.

Den gerade am Beispiel einer Signalübertragung von einem Teletex-Endgerät her erläuterten Verfahrensschritten entsprechende Verfahrensschritte laufen auch dann ab, wenn von einem Telex-Endgerät her Signale zu einem Teletex-Endgerät hin zu übertragen sind.

Es wurde bereits oben darauf hingewiesen, daß es sich bei der Signalbehandlungseinrichtung SBE auch um eine Rundsendeeinrichtung handeln kann. Auch in diesem Fall wird, wie bereits erläutert, anhand der von einem Teilnehmer-Endgerät her im Zuge des Verbindungsaufbaus übertragenen Wählzeichen erkannt, daß von der Fernschreib- und Datenvermittlungsanlage her eine Verbindung zu der Rundsendeeinrichtung aufzubauen ist. Im Zuge dieser Verbindung werden dann die weiterzuleitenden Datensignale sowie Angaben bezüglich der als Empfänger in Frage kommenden Teilnehmer-Endgeräte zu der Rundsendeeinrichtung hin übertragen. Für die Weiterleitung dieser Datensignale wird dann von dem Mikroprozessor MP der Rundsendeeinrichtung eine der Anzahl der in Frage kommenden Empfänger entsprechende Anzahl von Verbindungen aufgebaut. Die Weiterleitung der Datensignale kann im übrigen auch mit einer Umsetzung kombiniert sein, wenn beispielsweise Signale zwischen Telex-Endgeräten und Teletex-Endgeräten zu übertragen sind.

Schließlich kann es sich, wie bereits oben erwähnt, bei der Signalbehandlungseinrichtung SBE auch um eine Einrichtung für den elektronischen Briefdienst handeln. In diesem Fall erfolgt die Übertragung von Datensignalen zu der Signalbehandlungseinrichtung hin in der bereits dargestellten Weise. Ein Unterschied zu einer Signalumsetzeinrichtung bzw. zu einer Rundsendeeinrichtung besteht lediglich darin, daß die in die Signalbehandlungseinrichtung übernommenen Datensignale nicht automatisch weitergeleitet werden, sondern von einem Teilnehmer-Endgerät her abrufbar sind. Der Abruf kann dabei beispielsweise durch autorisierte Personen erfolgen.

Nunmehr wird auf die Übertragung von in der Signalbehandlungseinrichtung SBE zur Verfügung stehenden Informationssignalen zu der Fernschreib- und Datenvermittlungsanlage EDS hin näher eingegangen. Die Signalbehandlungseinrichtung führt selbsttätig eine Überwachung des Betriebsablaufes durch. Dies kann beispielsweise durch einen periodischen Anstoß von Testroutinen erfolgen. Werden bei Ablauf einer solchen Testroutine Unregelmäßigkeiten im Betriebsablauf der Signalbehandlungseinrichtung festgestellt, so gibt der Mikroprozessor MP der Signalbehandlungseinrichtung ein Informationssignal ab, welches zu der Fernschreib- und Datenvermittlungsanlage EDS hin zu übertragen ist. Dieses Informationssignal, welches Aufschluß über die Störung im Betriebsablauf gibt, wird vor einer Weiterleitung zunächst in den bereits erwähnten Durchlaufspeicher FIFO übernommen. Dieser Durchlaufspeicher FIFO wird von dem Mikroprozessor MP her in vorgegebenen Zeitabständen für das Auslesen von in ihm gespeicherten Informationssignalen angesteuert. Dabei können z. B. mehrere Informationssignale gespeichert sein, wenn die Informationssignale Störungen in den Übertragungskanälen K1 bis Kn betreffen. Ausgelesen werden die Informationssignale dann in der Reihenfolge ihres Einschreibens.

Erkennt der Mikroprozessor MP der Signalbehandlungseinrichtung bei der zyklischen Ansteuerung des Durchlaufspeichers FIFO ein Informationssignal, so wird für die Weiterleitung dieses Informationssignals eine über die Fernschreib- und Datenvermittlungsanlage EDS verlaufende Verbindung zu der bereits oben erwähnten Bedienungseinrichtung BE hin aufgebaut. Diese Verbindung verläuft über die Schnittstellenschaltung USART3 der Signalbehandlungseinrichtung und über die Anschlußschaltungen SAGD2 und SAGD1 der Fernschreib- und Datenvermittlungsanlage EDS. Für die Übertragung von Informnationssignalen steht somit ein von den Übertragungskanälen K1 bis Kn verschiedener Sonderkanal zur Verfügung. Bei der gerade erwähnten Bedienungseinrichtung kann es sich im übrigen um ein Teletex-Endgerät handeln, welches nach dem Empfang eines Informationssignals eine Störung in der Signalbehandlungseinrichtung anzeigt. Aufgrund einer solchen Anzeige können dann von dem Bedienpersonal der Fernschreib- und Datenvermittlungsanlage Schritte eingeleitet werden, um die Störung im Betriebsablauf der Signalbehandlungseinrichtung zu beheben.

Es kann aber auch so vorgegangen werden, daß die von der Signalbehandlungseinrichtung abgegebenen Informationssignale direkt in einer Einrichtung der Fernschreib- und Datenvermittlungsanlage EDS ausgewertet werden. In diesem Fall ist lediglich zwischen dieser und der Signalbehandlungseinrichtung eine Verbindung aufzubauen. Durch die Auswertung von Informationssignalen in der Fernschreib- und Datenvermittlungsanlage besteht die Möglichkeit, daß bei Auftreten von Störungen in der Signalbehandlungseinrichtung von der Fernschreib- und Datenvermittlungsanlage automatisch Schritte eingeleitet werden, um die aufgetretenen Störungen zu beheben. Diese Maßnahmen können beispielsweise darin bestehen, daß einzelne der Übertragungskanäle K1 bis Kn nicht mehr in eine Datensignalübertragung einbezogen werden.

Die Übertragung von Informationssignalen zu der Fernschreib- und Datenvermittlungsanlage bzw. zu der Bedienungseinrichtung BE hin kann entweder bereits im Zuge des Aufbaues einer Verbindung in Form von Dienstsignalen oder aber auch erst nach dem Aufbau der Verbindung während der Datenübertragungsphase erfolgen. Die Wahl des Übertragungszeitpunktes hängt von der Datenmenge ab, die jeweils mit einem Informationssignal zu übertragen ist. Sind als Informationssignale lediglich geringe Datenmengen zu übertragen, so ist es vorteilhaft, die Informationssignale in Form von Dienstsignalen im Zuge des Verbindungsaufbaues zu übertragen. Auf diese Weise kann durch Bewertung der Dienstsignale in der Fernschreib- und Datenvermittlungsanlage bzw. in der mit ihr verbundenen Bedienungseinrichtung BE die für eine Signalübertragung erforderliche Verbindungsdauer gering gehalten werden. Treten dagegen die Informationssignale in Form von größeren Datenmengen auf, so erfolgt die Übertragung zweckmäßigerweise während der eigentlichen Datenübertragungsphase einer Verbindung.

In der Zeichnung ist lediglich als Beispiel angegeben, daß die Übertragungskanäle K1 bis Kn der Signalbehandlungseinrichtung SBE jeweils mit zwei zu unterschiedlichen Gruppen von Anschlußschaltungen gehörenden Anschlußschaltungen verbunden sind. Im Falle einer Rundsendeeinrichtung bzw. einer Einrichtung für den elektronischen Briefdienst können die Übertragungskanäle aber auch lediglich mit einer der Gruppen von Anschlußschaltungen verbunden sein. Die Signalbehandlung bei einer Rundsendeeinrichtung würde dann darin bestehen, daß von einem Teilnehmer-Endgerät her abgegebene Datensignale ohne Umsetzung zu einer Mehrzahl von als Empfänger ausgewählten Teilnehmer-Endgeräten hin übertragen werden. Bei einer Einrichtung für den elektronischen Briefdienst liefe der gerade angegebene Anschluß an die Fernschreib- und Datenvermittlungsanlage dagegen darauf hinaus, daß die Nachrichtenhinterlegung und der Abruf von Nachrichten nur durch Teilnehmer-Endgeräte erfolgen kann, die an ein und dieselbe Gruppe von Anschlußschaltungen angeschlossen sind.

Bezüglich des Anschlusses einer Signalbehandlungseinrichtung an eine Fernschreib- und Datenvermittlungsanlage sei noch darauf hingewiesen, daß eine Signalbehandlungseinrichtung auch zwischen zwei miteinander in Verbindung stehenden Fernschreib- und Datenvermittlungsanlagen angeschlossen sein kann. In diesem Fall sind dann in Vermittlungsanlagen miteinander verbindende Übertragungsleitungen Übertragungskanäle der Signalumsetzeinrichtung geschaltet. Mit anderen Worten, die Übertragungskanäle der Signalbehandlungseinrichtung sind dann nur einseitig mit Anschlußschaltungen der in der Zeichnung dargestellten Fernschreib- und Datenvermittlungsanlage verbunden. Die andere Seite der Übertragungskanäle ist jeweils an eine Anschlußschaltung einer weiteren Fernschreib- und Datenvermittlungsanlage angeschlossen. Die beiden auf diese Weise miteinander in Verbindung stehenden Fernschreib- und Datenvermittlungsanlagen können dabei zu unterschiedlichen Übertragungsnetzen gehören. Bei einem derartigen Anschluß einer Signalbehandlungseinrichtung ist es vorteilhaft, wenn als Informationssignale über den Sonderkanal auch den Vermittlungsbetrieb zwischen den beiden über die Signalbehandlungseinrichtung verbundenen Vermittlungsanlagen betreffende Signale übertragen werden. Bei derartigen Signalen kann es sich beispielsweise um Informationen bezüglich der Anzahl der gerade für eine Datensignalübertragung zur Verfügung stehenden Übertragungsleitungen handeln.

Vorstehend wurde ausschließlich der Fall betrachtet, daß für die Übertragung von Informationssignalen ein von den Übertragungskanälen K1 bis Kn verschiedener Sonderkanal benutzt wird. Dies bringt den Vorteil mit sich, daß die für eine Übertragung von Datensignalen zur Verfügung stehenden Übertragungskanäle für eine Abgabe von Informationssignalen nicht belastet werden. Es kann aber auch ein gerade nicht in eine Übertragung von Datensignalen einbezogener Übertragungskanal für die Dauer der Übertragung von Informationssignalen als Sonderkanal benutzt werden. In diesem Fall ist für die Realisierung des Sonderkanals kein zusätzlicher schaltungstechnischer Aufwand erforderlich.

Zur Erläuterung der vorliegenden Erfindung wurde vorstehend auf die Übertragung bestimmter Informationssignale während des Betriebs der Signalbehandlungseinrichtung näher eingegangen. Das Verfahren gemäß der vorliegenden Erfindung ist jedoch nicht nur für die Übertragung der vorstehend angegebenen Informationssignale anwendbar. Vielmehr kann nach diesem immer dann verfahren werden, wenn beliebige Informationssignale während des Betriebs der Signalbehandlungseinrichtung von dieser abzugeben sind.

**Ansprüche**

1. Verfahren zum Übertragen von den Betrieb einer Signalbehandlungseinrichtung (SBE) betreffenden Informationssignalen von dieser Signalbehandlungseinrichtung her zu einer mit dieser über eine Anzahl von Übertragungskanälen - (K1 bis Kn) verbundenen Datenvermittlungsanlage (EDS), dadurch gekennzeichnet, daß die Informationssignale jeweils von der Signalbehandlungseinrichtung (SBE) her über einen zwischen dieser und der Datenvermittlungsanlage (EDS) bestehenden, gegebenenfalls von den Übertragungskanälen (K1 bis Kn) verschiedenen Sonderkanal (USART3) im Zuge einer gesonderten Verbindung zu einer die Informationssignale aufnehmenden Einrichtung - (BE) der Datenvermittlungsanlage hin übertragen werden.

2. Verfahren nach Anspruch 1, dadurch gekennzeichnet, daß als Informationssignale aufnehmende Einrichtung eine Bedienungseinrichtung (BE) benutzt wird, die an eine Teilnehmerleitung der Datenvermittlungsanlage (EDS) angeschlossen wird.

3. Verfahren nach Anspruch 1 oder 2, dadurch gekennzeichnet, daß die Informationssignale jeweils während der Datenübertragungsphase einer gesonderten Verbindung übertragen werden.

4. Verfahren nach Anspruch 1 oder 2, dadurch gekennzeichnet , daß die Informationssignale jeweils in Form von Dienstsignalen im Zuge des Verbindungsaufbaues übertragen werden.

5. Verfahren nach einem der Ansprüche 1 bis 4, dadurch gekennzeichnet, daß als Informationssignale eine Betriebsstörung anzeigende Signale übertragen werden, welche immer dann von der Signalbehandlungseinrichtung - (SBE) abgegeben werden, wenn im Zuge einer Selbstüberprüfung eine Störung im Betriebsablauf erkannt wird.

6. Verfahren nach einem der Ansprüche 1 bis 4, dadurch gekennzeichnet, daß als Informationssignale den Vermittlungsbetrieb zwischen über die Signalbehandlungseinrichtung (SBE) verbundenen Datenvermittlungsanlagen betreffende Signale übertragen werden, welche von einer der Datenvermittlungsanlagen her über die Signalbehandlungseinrichtung zu einer weiteren Datenvermittlungsanlage zu übertragen sind.